# EUROPÄISCHE PATENTSCHRIFT

(11) **EP 2 302 255 B1**
(45) Veröffentlichungstag und Bekanntmachung des Hinweises auf die Patenterteilung: **25.03.2020**
(21) Anmeldenummer: 10007259.4
(22) Anmeldetag: 14.07.2010
(51) Int. Cl.: F16F 15/133, F16F 15/121, F16F 15/16, F02B 67/04, F16H 55/14

(54) **Antriebsvorrichtung für zumindest einen Nebentrieb**
Drive device for at least one auxiliary drive
Dispositif d'entraînement pour au moins un engrenage auxiliaire

(30) Priorität: 23.09.2009 DE 102009042682
(43) Veröffentlichungstag der Anmeldung: 30.03.2011
(73) Patentinhaber: MAN Truck & Bus SE, 80995 München (DE)
(72) Erfinder: Miljanic, Mario, 71334 Waiblingen (DE)
(74) Vertreter: Kotitschke, Bernd

(56) Entgegenhaltungen:
- EP-A1- 1 612 386
- WO-A1-2006/102868
- DE-A1- 4 103 213
- DE-A1- 4 117 580
- DE-A1- 4 225 314
- DE-A1- 4 420 895
- DE-A1-102004 008 154
- FR-A1- 2 838 490
- JP-A- S6 079 124
- US-A- 5 156 249
- US-B1- 6 176 785

## Beschreibung

Die Erfindung betrifft eine Antriebsvorrichtung für zumindest einen Nebentrieb an einer Kraftabgabewelle einer Brennkraftmaschine, insbesondere an einer Kurbelwelle, gemäß dem Oberbegriff des Patentanspruches 1.

Bei Antriebsvorrichtungen an Brennkraftmaschinen mit relativ starken Drehungleichförmigkeiten zum Beispiel an der Kurbelwelle ist es bekannt, zur Verminderung der schwingungsbedingten Torsionsmomente stirnseitig einen Drehschwingungsdämpfer mit einer Tilgermasse bzw. einem Sekundärteil vorzusehen. Der direkt von der Kurbelwelle angetriebene Nebentrieb kann ggf. einen zusätzlichen Drehschwingungsdämpfer aufweisen. Eine solche Antriebsvorrichtung beschreibt beispielsweise die DE 41 03 213 A1 mit einem Riementrieb als Nebentrieb.

Die DE 10 2004 008 154 A1 offenbart eine Antriebsanordnung für Nebentriebe von Brennkraftmaschinen. Drei Antriebsräder (Kettenräder) von Nebentrieben sind mit einer Kurbelwelle mittels einer zentrischen Schraube fest verbunden. Die Schraube ist in eine entsprechende Gewindebohrung der Kurbelwelle eingeschraubt.

Die DE 42 25 314 A1 offenbart eine Triebscheibe für einen Riemen- oder Kettentrieb, die auf einer Antriebswelle einer Brennkraftmaschine befestigbar ist und ein Eingangsteil sowie ein relativ zu diesem verdrehbares Ausgangsteil besitzt, und die über eine Dämpfungseinrichtung mit in Umfangsrichtung komprimierbaren Kraftspeichern, wie Schraubendruckfedern, drehgekoppelt und über eine Lagerung relativ zueinander verdrehbar gelagert sind. Weiterhin ist ein Schwingungstilger mit einer Tilgermasse vorhanden, die unter Zwischenschaltung eines Dämpfers mit der gleichen Welle, wie die Triebscheibe, verbindbar ist.

Die DE 41 03 213 A1 offenbart eine Riemenscheibe, die an einer Abtriebswelle einer Brennkraftmaschine befestigbar ist, bei der zwischen einem mit der Abtriebswelle fest verbundenen Eingangsteil und einem als Riemenlaufring ausgebildeten Ausgangsteil eine in Umfangsrichtung elastische Dämpfungseinrichtung vorgesehen ist. Eingangs- und Ausgangsteil sind zueinander über ein Walzlager gelagert und sowohl das Eingangs- als auch das Ausgangsteil weist Abstützbereiche für Kraftspeicher auf.

Die JP S60 79124 A offenbart, dass am vorderen Ende einer Antriebswelle, die über ein Lager und eine temperaturabhängige Flüssigkeitskupplung direkt mit einer Kurbelwelle gekoppelt ist, ein Lüftergehäuse angebracht ist. Ein Gewicht ist an der Seitenfläche des Lüftergehäuses angebracht. Die Flüssigkeitskupplung befindet sich im Lüftergehäuse, die viskose Flüssigkeit in einer Scheibenkammer des Lüftergehäuses. Weiterhin wird bei Hochtemperaturbetrieb des Motors eine am vorderen Ende der Antriebswelle angebrachte Antriebsscheibe über die Viskosität der viskosen Flüssigkeit mit dem Lüftergehäuse in Eingriff gebracht. Mit dieser Anordnung können Drehschwingungen der Kurbelwelle reduziert werden.

Die DE 41 17 580 A1 betrifft eine Drehmomentübertragungseinrichtung mit einer ersten, an der Brennkraftmaschine befestigbaren, und einer zweiten, über eine Kupplung einem Getriebe zu- und abschaltbaren Schwungmasse, die über eine Wälzlagerung relativ zueinander verdrehbar gelagert sind und zwischen denen eine Dämpfungseinrichtung vorgesehen ist.

Derartige Nebentriebe mittels eines Stirnradtriebes mit zumindest einem direkt auf einem Lagerzapfen der Kurbelwelle angeordneten Stirnzahnrad dienen zum Beispiel zum Antrieb einer Wasserpumpe, eines Kompressors, etc. und benötigen ggf. wie vorstehend beschrieben einen zusätzlichen Drehschwingungsdämpfer zur Schaffung eines laufruhigen, zufriedenstellend verschleißarmen Nebentriebes.

Aufgabe der Erfindung ist es, eine Antriebsvorrichtung für zumindest einen Nebentrieb an einer Kraftabgabewelle einer Brennkraftmaschine vorzuschlagen, die bei einem verringerten Bauaufwand beiden Kriterien gerecht wird, nämlich einer adäquaten Schwingungsdämpfung der Kraftabgabewelle und zugleich der Bereitstellung eines laufruhigen, verschleißarmen Nebentriebes.

Diese Aufgabe wird gelöst mit den Merkmalen des Patentanspruches 1. Voreilhafte Weiterbildungen der Erfindung sind Gegenstand der Unteransprüche. Erfindungsgemäß wird vorgeschlagen, dass das zumindest eine Nebentrieb-Antriebselement mit dem Sekundärteil des Drehschwingungsdämpfers mittelbar oder unmittelbar gekoppelt, insbesondere trieblich verbunden ist. Überraschend wurde erkannt, dass das Sekundärteil geringeren Winkelbeschleunigungen unterliegt als die Kraftabgabewelle, insbesondere die Kurbelwelle, der Brennkraftmaschine, so dass bei einer entsprechenden Antriebsankopplung des Nebentriebes dieser keinen weiteren Drehschwingungsdämpfer bedarf und trotzdem laufruhig und verschleißarm funktioniert. Die durch die Ankopplung des zumindest einen Nebentriebes resultierende "Verstimmung" des Schwingungsdämpfers kann ggf. durch empirische Versuche und/oder durch Berechnungen so eingestellt werden, dass beide Kriterien zufriedenstellend erfüllt sind; eine ggf. geringfügig ansteigende Torsionsbelastung in der Kraftabgabewelle ist vernachlässigbar.

Gemäß einer hierzu konkreten, kompakten und funktionssicheren Ausführungsform ist bevorzugt vorgesehen, dass das zumindest eine Nebentrieb-Antriebselement und/oder das Sekundärteil des Drehschwingungsdämpfers drehbar an der Kraftabgabewelle gelagert ist, erfindungsgemäß auf einem Lagerzapfen der Kraftabgabewelle.

Baulich und fertigungstechnisch besonders günstig können das Primärteil und das Sekundärteil unter Zwischenschaltung schwingungsdämpfender Mittel radial übereinander angeordnet sein, wobei das zumindest eine Antriebselement über den Außenring als Sekundärteil angetrieben ist.
Des Weiteren kann das zumindest eine Stirnzahnrad mittelbar über ein vorzugsweise flexibles und/oder torsionssteifes Kraftübertragungs- und/oder Kupplungselement, insbesondere über ein scheibenförmiges, radial und/oder axial nachgiebiges, dünnwandiges Mitnehmerblech, mit dem Sekundärteil gekoppelt sein. Dies ermöglicht eine in Drehrichtung steife triebliche Verbindung, die jedoch zur Erzielung einer spannungsfreien Ankopplung des Stirnzahnrades in axialer und radialer Richtung begrenzt nachgiebig ist und beispielsweise auch geringfügige Fluchtungsfehler ausgleicht.

Das zum Beispiel Mitnehmerblech kann dazu in baulich besonders einfacher Weise mehrere, zwischen einem zentralen Scheibenring und ggf. einem radial äußeren Scheibenring vorgesehene Stege aufweisen, die durch ihre Formgebung (wellenförmig) und Geometrie (Stegbreite, Blechstärke) entsprechend nachgiebig ausgeführt sind.

Ferner kann das zumindest eine Stirnzahnrad zur Erzielung einer kompakten, in radialer Richtung flachen bzw. gedrängten Bauart mittels wenigstens eines Nadellagers auf dem Zapfen der Kraftabgabewelle verdrehbar gelagert sein. Ggf. kann aber auch eine einfache Gleitlagerung verwendet sein, da ja zum Beispiel zwischen dem Lagerzapfen der Kraftabgabewelle und dem Stirnzahnrad keine Drehzahldifferenzen auftreten.

Bei mehreren bevorzugt parallelen Nebentrieben können auf der Kraftabgabewelle, bevorzugt auf dem Lagerzapfen der Kraftabgabewelle, mehrere, bevorzugt drehfest miteinander gekoppelte bzw. verbundene Antriebselemente und/oder das Sekundärteil des Drehschwingungsdämpfers verdrehbar gelagert sein. In Falle einer Lagerung auch des Sekundärteiles auf dem Lagerzapfen der Kraftabgabewelle kann in der Regel das vorstehend angeführte Mitnehmerblech entfallen. Die Lagerungen der Stirnzahnräder und ggf. des Sekundärteiles sind dann bevorzugt durch ein oder mehrere Nadellager oder Gleitlager gebildet, die eine leichtgängige, kompakte Lagerung der einander unmittelbar benachbarten Funktionsteile bilden.

In vorteilhafter Weiterbildung der Erfindung kann der Drehschwingungsdämpfer am stirnseitigen Ende der Kraftabgabewelle angeordnet sein und/oder kann das zumindest eine Antriebselement des Nebentriebes zwischen dem Drehschwingungsdämpfer und dem Gehäuse der Brennkraftmaschine positioniert sein und damit quasi im Rücktrieb mit dem Sekundärteil gekoppelt sein. Damit kann in steifer Auslegung des Nebentriebes das zum Beispiel durch wenigstens ein Stirnzahnrad gebildete Antriebselement in unmittelbarer Nähe der gehäuseseitigen Lagerung der Kraftabgabewelle angeordnet sein und hohe Drehmomente übertragen.

Der Drehschwingungsdämpfer kann besonders bevorzugt hydraulisch gedämpft sein, um eine besonders laufruhige , schwingungsarme Übertragung des Drehmomentes vom Drehschwingungsdämpfer zum Nebentrieb zu gewährleisten.

In einer bevorzugten Ausgestaltung der Erfindung können dazu zwischen einem Innenring als Primärteil und einem radial äußeren Außenring als Sekundärteil des Drehschwingungsdämpfers mehrere, sternförmig ausgerichtete, biegeelastische Lamellen vorgesehen sein, die in korrespondierende Radialschlitze in Umfangsrichtung begrenzt federnd einragen, wobei die Radialschlitze mit einer Dämpfungsflüssigkeit befüllt sind. Die Dämpfungsflüssigkeit kann unmittelbar Schmieröl der Brennkraftmaschine sein, insbesondere wenn der Drehschwingungsdämpfer mit dem Nebentrieb in einem gemeinsamen, abgeschlossenen Triebraum positioniert ist.

Dabei können zur Erzielung einer fertigungstechnisch günstigen Konstruktion die Radialschlitze im Außenring des Drehschwingungsdämpfer durch zueinander in Umfangsrichtung beabstandete, kreissegmentförmige Zwischenstücke gebildet sein, die zwischen zwei Flanschringen und einem äußeren Stützring eingespannt sind. Die Zwischenstücke sind bevorzugt mittels die Flanschringe und die Zwischenstücke durchdringenden Schrauben befestigt.

Ferner können fertigungs- und montagetechnisch günstig auf dem Innenring achsparallele Nuten eingearbeitet sein, in die jeweils die biegeelastischen Lamellen einragen. Weiter ist bevorzugt vorgesehen, dass die Flanschringe des Sekundärteiles den Innenring des Primärteiles an dessen Stirnseiten ringförmig umfassen. Auch hierdurch wird ein fertigungs- und montagetechnisch einfacher, kompakter und günstiger Aufbau erzielt.

Schließlich können zur Sicherstellung einer besonders robusten, Drehschwingungen zuverlässig und dauerhaft abstützenden Konstruktion des Drehschwingungsdämpfers je Radialschlitz im Außenring des Sekundärteiles zwei Lamellen vorgesehen sein, die in ihrem radial äußeren Bereich in den Zwischenstücken fest eingespannt sind und die im radial inneren Bereich ein Umfangsspiel in den Radialschlitzen aufweisen und somit unter Verdrängung von in den Radialschlitzen befindlicher, dämpfender Flüssigkeit eine wirksame Schwingungsdämpfung jeweils aus einer mittleren Grundstellung heraus bewirken.

Das wenigstens eine Nebentrieb-Antriebselement ist bevorzugt durch ein Antriebsrad eines Zahntriebs, bevorzugt durch ein Stirnzahnrad gebildet, welches eine funktionssichere Kraftübertragung auf den Nebentrieb, zum Beispiel auf ein Antriebsrad einer Wasserpumpe etc., ermöglicht.

Zwei Ausführungsbeispiele der Erfindung sind im Folgenden anhand der beiliegenden Zeichnung näher erläutert. Es zeigen:
- Fig. 1: in raumbildlicher Darstellung einen stirnseitig an einer Kurbelwelle einer Brennkraftmaschine angeordneten Drehschwingungsdämpfer, dessen Sekundärteil über ein Mitnehmerblech mit einem Stirnzahnrad eines Nebentriebes trieblich verbunden ist,
- Fig. 2: einen Längsschnitt durch die Antriebsvorrichtung gemäß Fig. 1,
- Fig. 3: einen weiteren Längsschnitt durch eine Antriebsvorrichtung gemäß Fig. 1, jedoch mit zwei Stirnzahnrädern zum Antrieb zweier Nebentriebe über das Sekundärteil des Drehschwingungsdämpfers,
- Fig. 4: einen Längsschnitt durch den hydraulisch gedämpften Drehschwingungsdämpfer nach den vorhergehenden Figuren im Detail,
- Fig. 5: den Drehschwingungsdämpfer gemäß Fig. 4 in raumbildlicher, teilweise aufgebrochener Darstellung, und
- Fig. 6: einen teilweisen Querschnitt durch den Drehschwingungsdämpfer nach den Fig. 4 und 5 mit vergrößerter Darstellung der Zwischenstücke, der mit Dämpfungsflüssigkeit befüllten Radialschlitze und der Lamellen.

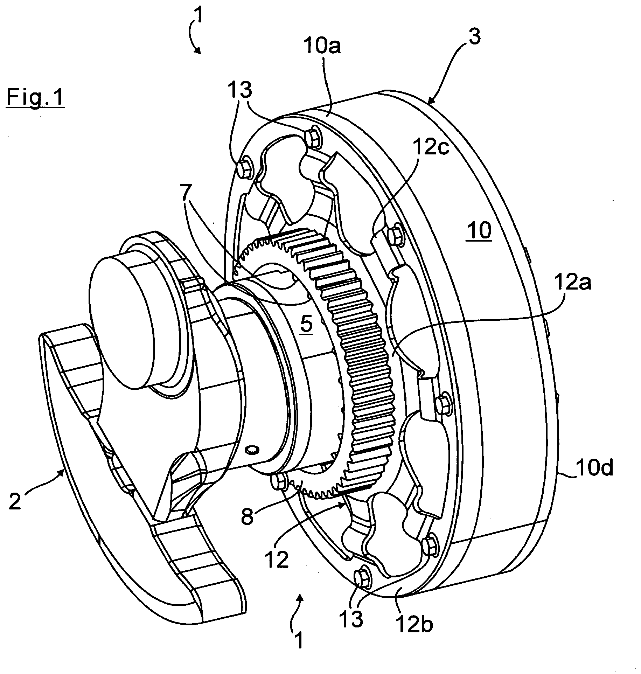

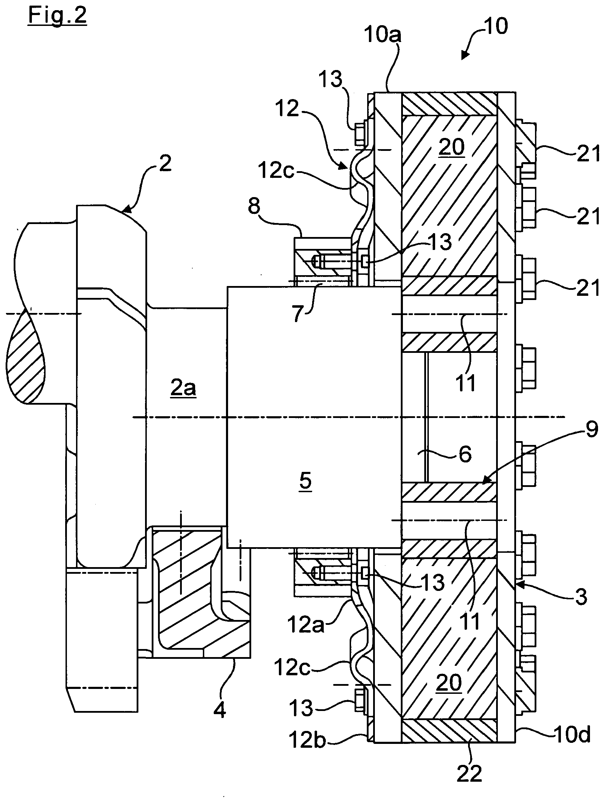

Die Fig. 1 und 2 zeigen eine erste Antriebsvorrichtung 1 an einer Kurbelwelle 2 als Kraftabgabewelle einer Brennkraftmaschine, an deren stirnseitigem Ende ein hydraulisch gedämpfter Drehschwingungsdämpfer 3 befestigt ist.

Die nur teilweise dargestellte Kurbelwelle 2 ist in bekannter Weise über Hauptlagerzapfen 2a (es ist nur ein Hauptlagerzapfen 2a ersichtlich) in einem in Fig. 2 nur angedeuteten Maschinengehäuse 4 drehbar gelagert.

An den Hauptlagerzapfen 2a schließt ein weiterer Lagerzapfen 5 mit einem im Durchmesser geringeren Führungszapfen 6 an. Auf dem Lagerzapfen 5 ist über ein Nadellager 7 ein Stirnzahnrad 8 verdrehbar gelagert, das als Antriebszahnrad für einen nicht weiter dargestellten Nebentrieb der Brennkraftmaschine dient, zum Beispiel zum Antrieb einer in das Maschinengehäuse integrierten Wasserpumpe, einen Kompressor, etc..

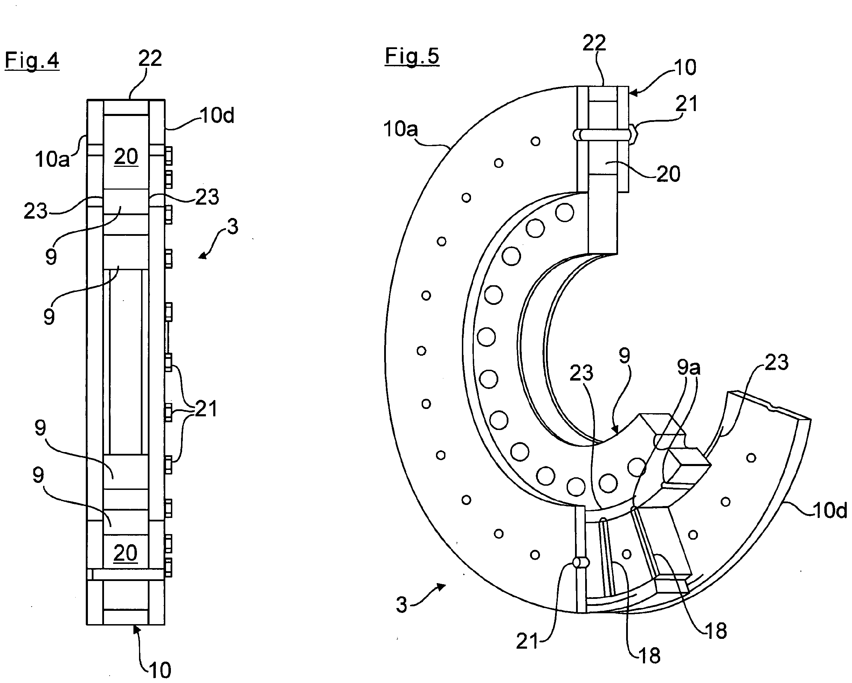

Der Drehschwingungsdämpfer 3, der nachfolgend anhand der Fig. 4, 5 und 6 näher beschrieben ist, setzt sich im wesentlichen zusammen aus einem Innenring 9 als Primärteil und einem Außenring 10 als Sekundärteil bzw. Sekundärmasse, die über schwingungsdämpfende Mittel miteinander verbunden sind.

Dabei ist der Innenring 9 mittels mehrerer Schrauben 11 mit dem Lagerzapfen 5 der Kurbelwelle 2 fest verschraubt, wobei dessen Innenumfangsfläche auf dem Führungszapfen 6 wie ersichtlich zentriert ist.

Der Außenring 10 ist mit einem der Kurbelwelle 2 zugewandten Ringflansch 10a versehen, der über ein in Umfangsrichtung torsionssteifes Mitnehmerblech 12 mit dem Stirnzahnrad 8 des Nebentriebes fest verbunden ist.

Das Mitnehmerblech 12 aus einem dünnwandigen Stahlblech weist einen radial inneren Scheibenring 12a und einen äußeren Scheibenring 12b auf, die über mehrere, umfangsverteilte Stege 12c miteinander verbunden sind. Die Scheibenringe 12a, 12b sind mittels mehrerer Schrauben 13 mit dem Stirnzahnrad 8 und dem Flanschring 10a fest verschraubt.

Die Stege 12c sind durch ihre Geometrie bzw. durch gewellte Bereiche und durch zum Beispiel unterschiedliche, von innen nach außen abnehmende Stegbreiten (vergleiche Fig. 1 und 2) so ausgeführt, dass sie geringfügige Fluchtungsfehler des Außenringes 10 mit Bezug zu dem auf dem Lagerzapfen 5 verdrehbar gelagerten Stirnzahnrad 8 ausgleichen und somit ggf. auftretende Verspannungen eliminieren.

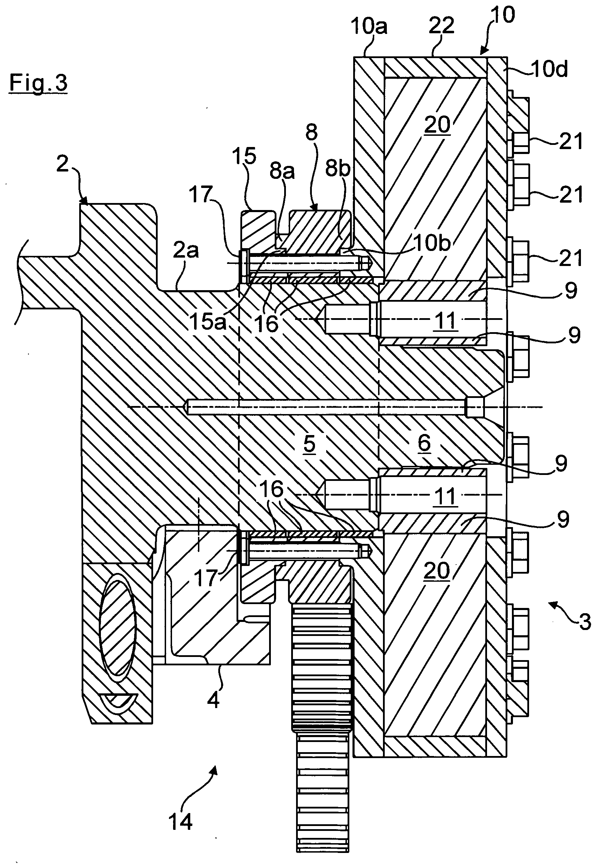

Die Fig. 3 zeigt eine weitere Antriebsvorrichtung 14, die nur soweit beschrieben ist, als sie sich von der Ausführung gemäß den Fig. 1 und 2 unterscheidet. Funktionell gleiche Teile sind mit gleichen Bezugszeichen versehen.

Abweichend zu den Fig. 1 und 2 sind auf dem Lagerzapfen 5 der Kurbelwelle 2 zwei Stirnzahnräder 8, 15 über Gleitlagerschalen 16 verdrehbar gelagert, die als Antriebszahnräder für zwei nicht weiter dargestellte Nebentriebe dienen.

Die getrennt gefertigten Stirnzahnräder 8, 15 sind mittels mehrerer, durchgehender Schrauben 17 mit dem Flanschring 10a des Drehschwingungsdämpfers 3 fest verschraubt.

Ferner ist an den Flanschring 10a ein Nabenabschnitt 10b angeformt, der über weitere Gleitlagerschalen 16 auf dem Lagerzapfen 5 der Kurbelwelle 2 verdrehbar gelagert ist.

Zur Sicherstellung eines biegesteifen Verbundes des Flanschringes 10 mit den Stirnzahnrädern 8, 15 sind in dem mittleren Stirnzahnrad 8 beidseitig Ringschultern 8a, 8b eingearbeitet, in die der Flanschabschnitt 10b und ein im Durchmesser kleinerer, ringförmiger Führungsabschnitt 15a des Stirnzahnrades 15 einragen. Anstelle der einzelnen Gleitlagerschalen 16 können auch ein gemeinsames Gleitlager 16 oder wie vorstehend ausgeführt ein oder mehrere Nadellager 7 verwendet sein.

Durch die unmittelbare Lagerung des Außenringes 10 des Drehschwingungsdämpfers 3 über den Nabenabschnitt 10b des Flanschringes 10a auf dem Lagerzapfen 5 kann das in den Fig. 1 und 2 beschriebene Mitnehmerblech 12 entfallen und das Antriebsmoment vom Außenring 10 direkt auf die Stirnzahnräder 8, 15 geleitet werden.

Die Fig. 4 bis 6 zeigen die Konstruktion des hydraulisch dämpfenden Schwingungsdämpfers 3 gemäß den Fig. 1 und 2 im Detail.

Wie insbesondere aus Fig. 5 ersichtlich ist, weist der Innenring 9 als Primärteil an seinem Außenumfang eine Vielzahl achsparalleler Nuten 9a auf, in die jeweils paarweise angeordnete, sternförmig ausgerichtete, biegeelastische Lamellen 18 einragen.

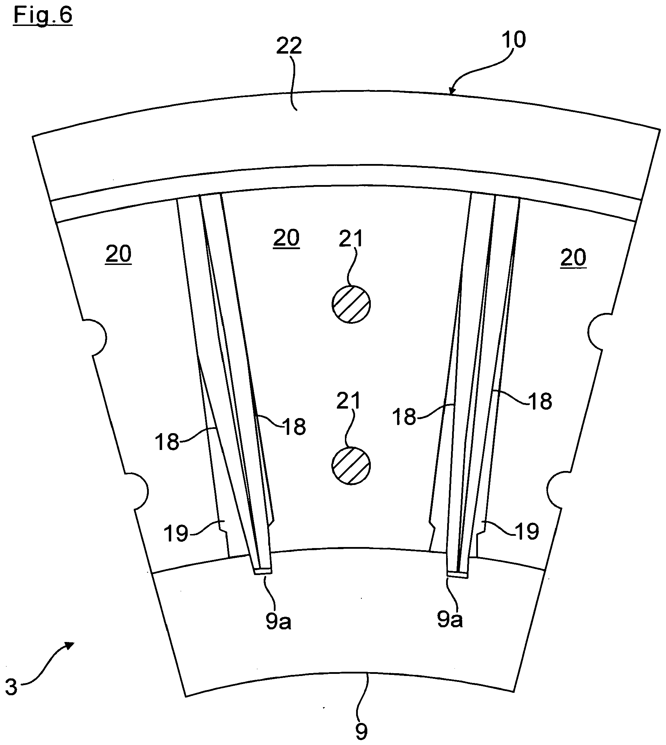

Die Lamellen 18 (vergleiche Fig. 6) sind in Radialschlitze 19 des Außenringes 10 eingesetzt, welche Radialschlitze 19 jeweils zwischen kreissegmentförmigen Zwischenstücken 20 des Außenringes 10 ausgebildet sind. Die Lamellen 18 weisen in ihrem radial äußeren Bereich eine größere Dicke auf und sind in den Zwischenstücken 20 fest eingespannt.

Der radial innere Bereich der Lamellen 18 weist mit Bezug zu den Radialschlitzen 19 wie ersichtlich ein Umfangsspiel in beiden Drehrichtungen auf, über das der Außenring 10 ausgehend von einer mittleren Grundstellung der Lamellen 18 relativ zum Innenring 9 Drehschwingungen innerhalb des Umfangsspieles aufnehmen kann.

Die Zwischenstücke 20 sind zusammen mit den beiderseitigen Flanschringen 10a und 10d des Außenringes 10 mittels mehrerer Schrauben 21 fest verschraubt, wobei sie mit ihren radial inneren und radial äußeren Randbereichen den Innenring 9 und einen äußeren Stützring 22 umfassen.

Zur hydraulischen Dämpfung der Drehschwingungen sind die Radialschlitze mit einer hydraulisch dämpfenden Flüssigkeit befüllt, die bei auftretenden Schwingungsamplituden zwischen den um die Lamellen 18 gebildeten Kammern oder Schlitzen entsprechend hin und her verdrängt wird. Die Radialschlitze 19 sind gegenüber dem Innenring 9 und den Flanschringen 10a, 10d mittels beidseitiger Dichtringe 23 abgedichtet. Die Dämpfungsflüssigkeit kann Schmieröl aus dem Schmierölsystem der Brennkraftmaschine sein.

Der Drehschwingungsdämpfer 3 gemäß den Fig. 4 bis 6 kann in Anpassung zum Ausführungsbeispiel nach Fig. 3 an seinem Flanschring 10a wie beschrieben mit einem Nabenabschnitt 10b ausgeführt sein.

Die beschriebene Antriebsvorrichtung 1 oder 14 kann auch an einer anderen Kraftabgabewelle der Brennkraftmaschine vorgesehen sein, zum Beispiel an einer Zwischenwelle oder an einer Nockenwelle mit angekoppeltem Nebentrieb.

## Patentansprüche

1. Antriebsvorrichtung für zumindest einen Nebentrieb an einer Kraftabgabewelle einer Brennkraftmaschine, insbesondere der Kurbelwelle, mit zumindest einem auf der Kraftabgabewelle angeordneten Nebentrieb-Antriebsrad eines Zahnradtriebes und einem am Wellenende befestigten Drehschwingungsdämpfer mit einem Primärteil und einem mit dem Primärteil schwingungsdämpfend verbundenem Sekundärteil, wobei das zumindest eine Antriebsrad (8; 15) mit dem Sekundärteil (10) des Drehschwingungsdämpfers (3) mittelbar oder unmittelbar gekoppelt, insbesondere trieblich verbunden ist, **dadurch gekennzeichnet, dass** das zumindest eine Antriebsrad (8; 15) auf einem Lagerzapfen (5) der Kraftabgabewelle (2) drehbar gelagert ist.

2. Antriebsvorrichtung nach Anspruch 1, **dadurch gekennzeichnet, dass** das Sekundärteil (10) des Drehschwingungsdämpfers (3) drehbar an der Kraftabgabewelle (2) gelagert ist, insbesondere auf einem Lagerzapfen (5) der Kraftabgabewelle (2) drehbar gelagert ist.

3. Antriebsvorrichtung nach Anspruch 1 oder 2, **dadurch gekennzeichnet, dass** das Primärteil (9) und das Sekundärteil (10) unter Zwischenschaltung schwingungsdämpfender Mittel (18) radial übereinander angeordnet sind und dass das zumindest eine Antriebsrad (8; 15) über einen Außenring (10) als Sekundärteil angetrieben ist.

4. Antriebsvorrichtung nach einem der Ansprüche 1 bis 3, **dadurch gekennzeichnet, dass** das zumindest eine Antriebsrad (8) mittelbar über ein vorzugsweise flexibles und/oder torsionssteifes Kraftübertragungs- und/oder Kupplungselement, insbesondere über ein membranförmiges, radial und/oder axial nachgiebiges, dünnwandiges Mitnehmerblech (12), mit dem Sekundärteil (10) gekoppelt ist.

5. Antriebsvorrichtung nach Anspruch 4, **dadurch gekennzeichnet, dass** das Mitnehmerblech (12) mehrere, zwischen einem zentralen Scheibenring (12a) und/oder einem radial äußeren Scheibenring (12b) vorgesehene Stege (12c) aufweist, die durch ihre Formgebung und Geometrie entsprechend nachgiebig ausgeführt sind.

6. Antriebsvorrichtung nach einem der Ansprüche 2 bis 5, **dadurch gekennzeichnet, dass** das zumindest eine Antriebsrad (8) mittels wenigstens eines Nadellagers (7) und/oder Gleitlagers (16) auf der Kraftabgabewelle (2) verdrehbar gelagert ist.

7. Antriebsvorrichtung nach einem der vorhergehenden Ansprüche, **dadurch gekennzeichnet, dass** bei mehreren Nebentrieben, insbesondere bei mehreren parallelen Nebentrieben, auf der Kraftabgabewelle (2), insbesondere auf dem Lagerzapfen (5) der Kraftabgabewelle (2), mehrere bevorzugt drehfest miteinanderverbundene Antriebsrad (8, 15) und/oder das Sekundärteil (10) des Drehschwingungsdämpfers (3) verdrehbar gelagert sind.

8. Antriebsvorrichtung nach Anspruch 6 und 7, **dadurch gekennzeichnet, dass** die Lagerungen der Antriebsrad (8, 15) und/oder des Sekundärteiles (10) auf dem Lagerzapfen (5) der Kraftabgabewelle (2) durch ein oder mehrere Nadellager (7) oder Gleitlager (16) gebildet sind.

9. Antriebsvorrichtung nach einem der vorhergehenden Ansprüche, **dadurch gekennzeichnet, dass** der Drehschwingungsdämpfer (3) am stirnseitigen Ende der Kraftabgabewelle (2) angeordnet ist und/oder dass das zumindest eine Antriebsrad (8, 15) des Nebentriebes zwischen dem Drehschwingungsdämpfer (3) und dem Gehäuse (4) der Brennkraftmaschine positioniert ist.

10. Antriebsvorrichtung nach einem der vorhergehenden Ansprüche, **dadurch gekennzeichnet, dass** der Drehschwingungsdämpfer (3) hydraulisch gedämpft ist.

11. Antriebsvorrichtung nach Anspruch 10, **dadurch gekennzeichnet, dass** zwischen einem Innenring (9) als Primärteil und einem radial äußeren Außenring (10) als Sekundärteil des Drehschwingungsdämpfers (3) mehrere, sternförmig ausgerichtete, biegeelastische Lamellen (18) vorgesehen sind, die in korrespondierende Radialschlitze (19) in Umfangsrichtung begrenzt federnd einragen, wobei die Radialschlitze (19) mit einer Dämpfungsflüssigkeit befüllt sind.

12. Antriebsvorrichtung nach Anspruch 11, **dadurch gekennzeichnet, dass** die Radialschlitze (19) im Außenring (10) durch zueinander in Umfangsrichtung beabstandete, kreissegmentförmige Zwischenstücke (20) gebildet sind, die zwischen zwei Flanschringen (10a, 10d) und einem äußeren Stützring (22) eingespannt sind.

13. Antriebsvorrichtung nach Anspruch 12, **dadurch gekennzeichnet, dass** die Zwischenstücke (20) mittels die Flanschringe (10a, 10d) und die Zwischenstücke (20) durchdringenden Schrauben (21) befestigt sind.

14. Antriebsvorrichtung nach einem der Ansprüche 11 bis 13, **dadurch gekennzeichnet, dass** auf dem Innenring (9) achsparallele Nuten (9a) eingearbeitet sind, in die jeweils die biegeelastischen Lamellen (18) einragen.

15. Antriebsvorrichtung nach einem der Ansprüche 12 bis 14, **dadurch gekennzeichnet, dass** die Flanschringe (10a, 10d) des Sekundärteiles (10) den Innenring (9) des Primärteiles an dessen Stirnseiten ringförmig umfassen.

16. Antriebsvorrichtung nach einem der Ansprüche 12 bis 15, **dadurch gekennzeichnet, dass** je Radialschlitz (19) im Außenring (10) des Sekundärteiles zwei Lamellen (18) vorgesehen sind, die in ihrem radial äußeren Bereich in die Zwischenstücke (20) fest eingespannt sind und die im radial inneren Bereich ein Umfangsspiel in den Radialschlitzen (19) aufweisen.

## Claims

1. A drive apparatus for at least one auxiliary drive on a power take-off shaft of an internal combustion engine, in particular the crankshaft, having at least one auxiliary drive gear of a gearwheel drive, which auxiliary drive gear is arranged on the power take-off shaft, and a torsional vibration damper which is fastened to the shaft end with a primary part and a secondary part which is connected to the primary part in a manner which damps vibrations, the at least one drive gear (8; 15) being coupled indirectly or directly, in particular being drive-connected, to the secondary part (10) of the torsional vibration damper (3), **characterized in that** the at least one drive gear (8; 15) is mounted rotatably on a bearing journal (5) of the power take-off shaft (2).

2. The drive apparatus according to Claim 1, **characterized in that** the secondary part (10) of the torsional vibration damper (3) is mounted rotatably on the power take-off shaft (2), in particular is mounted rotatably on a bearing journal (5) of the power take-off shaft (2).

3. The drive apparatus according to Claim 1 or 2, **characterized in that** the primary part (9) and the secondary part (10) are arranged radially above one another with vibration-damping means (18) being connected in between, and **in that** the at least one drive gear (8; 15) is driven via an outer ring (10) as secondary part.

4. The drive apparatus according to one of Claims 1 to 3, **characterized in that** the at least one drive gear (8) is coupled to the secondary part (10) indirectly via a preferably flexible and/or torsionally rigid force transmission element and/or clutch element, in particular via a diaphragm-shaped, radially and/or axially resilient, thin-walled driver plate (12).

5. The drive apparatus according to Claim 4, **characterized in that** the driver plate (12) has a plurality of webs (12c) which are provided between a central disc ring (12a) and/or a radially outer disc ring (12b) and are of correspondingly resilient configuration as a result of their shape and geometry.

6. The drive apparatus according to one of Claims 2 to 5, **characterized in that** the at least one drive gear (8) is mounted rotatably on the power take-off shaft (2) by means of at least one needle bearing (7) and/or plain bearing (16).

7. The drive apparatus according to one of the preceding claims, **characterized in that**, in the case of a plurality of auxiliary drives, in particular in the case of a plurality of parallel auxiliary drives, a plurality of drive gears (8, 15) which are preferably connected fixedly to one another so as to rotate together and/or the secondary part (10) of the torsional vibration damper (3) are/is mounted rotatably on the power take-off shaft (2), in particular on the bearing journal (5) of the power take-off shaft (2).

8. The drive apparatus according to Claims 6 and 7, **characterized in that** the bearing systems of the drive gears (8, 15) and/or of the secondary part (10) on the bearing journal (5) of the power take-off shaft (2) are formed by way of one or more needle bearings (7) or plain bearings (16).

9. The drive apparatus according to one of the preceding claims, **characterized in that** the torsional vibration damper (3) is arranged at the front-side end of the power take-off shaft (2), and/or **in that** the at least one drive gear (8, 15) of the auxiliary drive is positioned between the torsional vibration damper (3) and the housing (4) of the internal combustion engine.

10. The drive apparatus according to one of the preceding claims, **characterized in that** the torsional vibration damper (3) is damped hydraulically.

11. The drive apparatus according to Claim 10, **characterized in that** a plurality of resiliently flexible lamellae (18) which are oriented in a star-shaped manner are provided between an inner ring (9) as primary part and a radially outer outer ring (10) as secondary part of the torsional vibration damper (3), which lamellae (18) protrude into corresponding radial slots (19) in a manner which is sprung to a limited extent in the circumferential direction, the radial slots (19) being filled with a damping liquid.

12. The drive apparatus according to Claim 11, **characterized in that** the radial slots (19) are formed in the outer ring (10) by way of circular segment-shaped intermediate pieces (20) which are spaced apart from one another in the circumferential direction and are clamped in between two flange rings (10a, 10d) and an outer supporting ring (22).

13. The drive apparatus according to Claim 12, **characterized in that** the intermediate pieces (20) are fastened by means of screws (21) which penetrate the flange rings (10a, 10d) and the intermediate pieces (20) .

14. The drive apparatus according to one of Claims 11 to 13, **characterized in that** axially parallel grooves (9a) are machined on the inner ring (9), into which grooves (9a) the resiliently flexible lamellae (18) protrude in each case.

15. The drive apparatus according to one of Claims 12 to 14, **characterized in that** the flange rings (10a, 10d) of the secondary part (10) enclose the inner ring (9) of the primary part on its end sides in an annular manner.

16. The drive apparatus according to one of Claims 12 to 15, **characterized in that** two lamellae (18) are provided per radial slot (19) in the outer ring (10) of the secondary part, which lamellae (18), in their radially outer region, are clamped fixedly into the intermediate pieces (20) and, in the radially inner region, have a circumferential play in the radial slots (19) .

## Revendications

1. Dispositif d'entraînement pour au moins un engrenage auxiliaire au niveau d'un arbre de prise de force d'un moteur à combustion interne, en particulier un vilebrequin, comprenant au moins une roue d'entraînement d'engrenage auxiliaire d'un engrenage à roue dentée, disposée sur l'arbre de prise de force, et un amortisseur d'oscillations de torsion fixé à l'extrémité de l'arbre, avec une partie primaire et une partie secondaire connectée à la partie primaire avec amortissement des oscillations, l'au moins une roue d'entraînement (8 ; 15) étant accouplée directement ou indirectement à la partie secondaire (10) de l'amortisseur d'oscillations de torsion (3), en particulier étant connectée par entraînement à celle-ci, **caractérisé en ce que** l'au moins une roue d'entraînement (8 ; 15) est supportée de manière rotative sur un tourillon de palier (5) de l'arbre de prise de force (2).

2. Dispositif d'entraînement selon la revendication 1, **caractérisé en ce que** la partie secondaire (10) de l'amortisseur d'oscillations de torsion (3) est supportée de manière rotative sur l'arbre de prise de force (2), en particulier est supportée de manière rotative sur un tourillon de palier (5) de l'arbre de prise de force (2).

3. Dispositif d'entraînement selon la revendication 1 ou 2, **caractérisé en ce que** la partie primaire (9) et la partie secondaire (10) sont disposées radialement l'une au-dessus de l'autre avec interposition de moyens d'amortissement des oscillations (18) et **en ce que** l'au moins une roue d'entraînement (8 ; 15) est entraînée par le biais d'une bague extérieure (10) en tant que partie secondaire.

4. Dispositif d'entraînement selon l'une quelconque des revendications 1 à 3, **caractérisé en ce que** l'au moins une roue d'entraînement (8) est connectée à la partie secondaire (10) de manière indirecte par le biais d'un élément de transfert de force et/ou d'accouplement de préférence flexible et/ou rigide en torsion, en particulier par le biais d'une tôle d'entraînement (12) à parois minces, en forme de membrane, flexible radialement et/ou axialement.

5. Dispositif d'entraînement selon la revendication 4, **caractérisé en ce que** la tôle d'entraînement (12) présente plusieurs nervures (12c) prévues entre un disque annulaire central (12a) et/ou un disque annulaire radialement extérieur (12b), lesquelles sont réalisées de par leur forme et leur géométrie de manière flexible en conséquence.

6. Dispositif d'entraînement selon l'une quelconque des revendications 2 à 5, **caractérisé en ce que** l'au moins une roue d'entraînement (8) est supportée de manière rotative sur l'arbre de prise de force (2) au moyen d'au moins un palier à aiguilles (7) et/ou un palier lisse (16).

7. Dispositif d'entraînement selon l'une quelconque des revendications précédentes, **caractérisé en ce que** dans le cas de plusieurs engrenages auxiliaires, en particulier dans le cas de plusieurs engrenages auxiliaires parallèles, plusieurs roues d'entraînement (8, 15) connectées les unes aux autres de préférence de manière solidaire en rotation et/ou la partie secondaire (10) de l'amortisseur d'oscillations de torsion (3), sont supportées de manière rotative sur l'arbre de prise de force (2), en particulier sur le tourillon de palier (5) de l'arbre de prise de force (2).

8. Dispositif d'entraînement selon les revendications 6 et 7, **caractérisé en ce que** les supports sur palier de la roue d'entraînement (8, 15) et/ou de la partie secondaire (10) sur le tourillon de palier (5) de l'arbre de prise de force (2) sont formés par un ou plusieurs paliers à aiguilles (7) ou paliers lisses (16).

9. Dispositif d'entraînement selon l'une quelconque des revendications précédentes, **caractérisé en ce que** l'amortisseur d'oscillations de torsion (3) est disposé au niveau de l'extrémité frontale de l'arbre de prise de force (2) et/ou **en ce que** l'au moins une roue d'entraînement (8, 15) de l'engrenage auxiliaire est positionnée entre l'amortisseur d'oscillations de torsion (3) et le boîtier (4) du moteur à combustion interne.

10. Dispositif d'entraînement selon l'une quelconque des revendications précédentes, **caractérisé en ce que** l'amortisseur d'oscillations de torsion (3) est amorti hydrauliquement.

11. Dispositif d'entraînement selon la revendication 10, **caractérisé en ce qu'**entre une bague intérieure (9) en tant que partie primaire et une bague extérieure (10) radialement extérieure en tant que partie secondaire de l'amortisseur d'oscillations de torsion (3) sont prévues plusieurs lamelles élastiques en flexion (18), orientées en forme d'étoile, qui pénètrent de manière élastique dans une mesure limitée dans des fentes radiales correspondantes (19) dans la direction périphérique, les fentes radiales (19) étant remplies d'un liquide d'amortissement.

12. Dispositif d'entraînement selon la revendication 11, **caractérisé en ce que** les fentes radiales (19) dans la bague extérieure (10) sont formées par des pièces intermédiaires (20) en forme de segments de cercle espacées les unes des autres dans la direction périphérique, qui sont serrées entre deux brides annulaires (10a, 10d) et une bague de support extérieure (22).

13. Dispositif d'entraînement selon la revendication 12, **caractérisé en ce que** les pièces intermédiaires (20) sont fixées au moyen des brides annulaires (10a, 10d) et de vis (21) traversant les pièces intermédiaires (20).

14. Dispositif d'entraînement selon l'une quelconque des revendications 11 à 13, **caractérisé en ce que** des rainures d'axes parallèles (9a) sont réalisées sur la bague intérieure (9), dans lesquelles pénètrent à chaque fois les lamelles élastiques en flexion (18).

15. Dispositif d'entraînement selon l'une quelconque des revendications 12 à 14, **caractérisé en ce que** les brides annulaires (10a, 10d) de la partie secondaire (10) entourent sous forme annulaire la bague intérieure (9) de la partie primaire au niveau de ses côtés frontaux.

16. Dispositif d'entraînement selon l'une quelconque des revendications 12 à 15, **caractérisé en ce que** deux lamelles (18) sont prévues dans chaque fente radiale (19) dans la bague extérieure (10) de la partie secondaire, lesquelles sont serrées fixement dans la région radialement extérieure dans les pièces intermédiaires (20) et présentent dans la région radialement intérieure un jeu périphérique dans les fentes radiales (19).
